# FASCICULE DE BREVET EUROPEEN

(11) **EP 2 886 804 B1**
(45) Date de publication et mention de la délivrance du brevet: **16.08.2017**
(21) Numéro de dépôt: 13199231.5
(22) Date de dépôt: 20.12.2013
(51) Int. Cl.: F01D 11/12, F01D 25/24

(54) **Dispositif d'étanchéité pour un compresseur de turbomachine**
Dichtungsanordnung für einen Verdicther eines Turbotriebwerks
Sealing device for a compressor of a turbomachine

(43) Date de publication de la demande: 24.06.2015
(73) Titulaire: Safran Aero Boosters SA, 4041 Herstal (BE)
(72) Inventeur: CORTEQUISSE, Jean-François, 3870 Heers (BE)
(74) Mandataire: Lecomte & Partners

(56) Documents cités:
- EP-A1- 2 418 387
- US-A- 4 392 656
- US-B2- 7 775 766

## Description

### Domaine technique

L'invention a trait à un dispositif d'étanchéité pour turbomachine axiale. Plus précisément, l'invention a trait à une paroi composite de compresseur de turbomachine axiale avec un dispositif d'étanchéité doté d'une couche d'abradable et d'un ruban circulaire intercalé entre la paroi et la couche d'abradable. L'invention a également trait à une turbomachine axiale.

Il est à noter que l'expression de langue anglaise " abradable " est communément utilisée pour désigner un matériau friable apte à assurer une certaine étanchéité avec une surface mobile par rapport à ce matériau. Ce matériau peut présenter diverses compositions, structures et formes. A titre d'exemple, une paroi, éventuellement externe, de compresseur de turbomachine axiale, pourvue d'une couche de ce matériau permet d'assurer une étanchéité tournante avec les extrémités des aubes rotoriques dudit compresseur. Cela permet de conserver l'intégrité de l'ensemble et ce malgré les déformations, mêmes légères, inhérentes à la turbomachine, notamment des déformations en élongation des aubes en raison des forces centrifuges. En réduisant au minimum le jeu entre les aubes mobiles et le carter de la veine fluide, on augmente l'efficacité et le rendement du turboréacteur.

### Technique antérieure

Afin d'augmenter le rendement d'une turbomachine, les compresseurs, les soufflantes, les turbines sont équipés de joints. Des joints en matériau abradable sont disposés sur les surfaces de stator et coopèrent avec le rotor. En particulier, des joints en abradable sont disposés sur la surface interne du carter du compresseur basse pression et assurent l'étanchéité avec les aubes rotoriques du compresseur.

Afin d'alléger le carter du compresseur, il est connu de le réaliser en un matériau composite à matrice organique et en fibres de carbone. Or, l'adhésion entre le matériau abradable et le matériau composite du carter est faible à cause de la dilatation différentielle. Pour contrer cet effet, un feuillard métallique est intercalé entre le carter et l'abradable. Le feuillard étant collé au carter composite, sa surface est perforée afin d'améliorer l'ancrage de la colle au feuillard.

Le document EP 2 418 387 A1 divulgue un carter composite de compresseur de turbomachine axiale. Le carter comprend une couche de matériau abradable avec un feuillard métallique intercalé entre la couche d'abradable et le carter composite à matrice organique. Pour améliorer sa cohésion sur le carter composite, le feuillard présente une surface perforée.

Le document US 7,775,766 B2 divulgue une turbomachine comportant une virole recouverte d'un matériau abradable. La virole comprend un support et un revêtement abradable du type mousse métallique. Le support montre des perforations pour le refroidissement. Ainsi, un écoulement peut traverser radialement la virole en empruntant lesdites perforations.

Le document US 4,392,656 A divulgue une turbomachine comprenant un rotor avec une rangée d'aubes entourées par une couche d'usure. Le stator est muni d'un support annulaire qui reçoit deux intercalaires, dont une couche de refroidissement et une couche de séparation. Cette dernière est en contact de la couche d'usure et présente une pluralité de perforations permettant de la rendre perméable.

Or, ces perforations fragilisent l'abradable en cas de contact avec les aubes rotoriques du compresseur. En fonctionnement, suite à des contacts répétés entre les aubes rotoriques et l'abradable, ce dernier montre une dégradation prématurée, et éventuellement une décohésion. Dès lors, le joint abradable n'assure plus sa fonction.

### Résumé de l'invention

### Problème technique

L'invention a pour objectif de résoudre au moins un des problèmes techniques présenté par l'art antérieur, et éventuellement de conserver au moins un des avantages cités. L'invention a également pour objectif d'augmenter la durabilité d'un dispositif d'étanchéité de turbomachine axiale avec un ruban circulaire doté d'une couche d'abradable en cas d'abrasion. L'invention a également pour objectif de réduire le coût de fabrication d'un dispositif d'étanchéité de turbomachine axiale avec ruban circulaire recevant une couche d'abradable.

### Solution technique

On aura bien compris que l'invention propose un ruban circulaire de turbomachine comprenant une couche annulaire de matériau abradable, et une surface recouverte par la couche de matériau abradable qui présente une zone circulaire lisse et une zone circulaire perforées sur laquelle sont réparties des perforations.

L'invention a trait à un dispositif d'étanchéité de turbomachine axiale selon la revendication 1, comprenant notamment un ruban circulaire avec une surface extérieure et une surface intérieure ;une couche annulaire de matériau abradable sur une des surfaces extérieure et intérieure du ruban, destinée à assurer une étanchéité avec un élément tournant de la turbomachine par rapport au ruban, telle une rangée annulaire d'aubes, la surface du ruban recouverte par la couche d'abradable comporte au moins une zone circulaire perforée avec une série de perforations réparties sur ladite zone, et comprend, en outre, une zone circulaire lisse, remarquable en ce que la longueur axiale de la zone lisse (44) est supérieure à au moins trois fois l'écartement moyen entre les perforations (50).

Suivant un mode avantageux de l'invention, le ruban circulaire est une bande métallique tel un feuillard métallique, préférentiellement la surface recouverte d'abradable est une surface interne du ruban, éventuellement la couche d'abradable bouche les perforations de la zone perforée.

Suivant un mode avantageux de l'invention, la zone lisse est délimitée axialement par la zone perforée, la zone lisse s'étend sur au moins 20%, préférentiellement sur la majorité, plus préférentiellement sur au moins 80% de la surface du ruban recouverte d'abradable.

Suivant un mode avantageux de l'invention, les perforations de la zone perforée sont espacées selon un maillage régulier, la longueur axiale de la zone lisse est supérieure à 5 fois, préférentiellement supérieure à 20 fois l' écartement moyen entre les perforations.

Suivant un mode avantageux de l'invention, le ruban circulaire présente une épaisseur constante comprise entre 0,05 mm et 2,00 mm ; préférentiellement comprise entre 0,10 mm et 0,60 mm; plus préférentiellement comprise entre 0,15 mm et 0,20 mm, éventuellement les zones forment des bandes annulaires.

Suivant un mode avantageux de l'invention, la zone perforée comprend au moins 5 perforations par cm2 ayant un diamètre inférieur ou égal à 2,00 mm, préférentiellement au moins 30 perforations par cm2 ayant un diamètre inférieur ou égal à 0,15 mm, plus préférentiellement au moins 100 perforations par cm2 ayant un diamètre inférieur ou égal à 0,09 mm.

Suivant un mode avantageux de l'invention, la zone perforée et la série de performations sont respectivement une première zone circulaire perforée et une première série de perforations, la surface recouverte comprenant en outre une deuxième zone circulaire perforée avec une deuxième série de perforations réparties sur la deuxième zone, la zone lisse étant disposée axialement entre la première zone et la deuxième zone, préférentiellement le ruban comprend une alternance axiale de zones lisses et de zones perforées.

Suivant un mode avantageux de l'invention, la couche d'abradable s'étend axialement sur toute la longueur axiale du ruban et/ou le ruban s'étend axialement sur toute la longueur axiale de la couche d'abradable.

Suivant un mode avantageux de l'invention, le dispositif d'étanchéité comprend une paroi annulaire qui comprend une surface interne sur laquelle est disposée le ruban, éventuellement la paroi annulaire comprend plusieurs couches annulaires de matériau abradable et plusieurs rubans qui sont intercalés entre la paroi et chaque couche d'abradable.

Suivant un mode avantageux de l'invention, le ruban est fixé à la paroi annulaire à l'aide de colle mise en oeuvre au niveau d'au moins une zone perforée, préférentiellement la colle est uniquement appliquée axialement sur chaque zone perforée, éventuellement la paroi annulaire comprend au moins une bride annulaire de fixation qui s'étend radialement et qui comprend des moyens de fixation tels des orifices de fixation.

Suivant un mode avantageux de l'invention, la paroi annulaire comprend une résine organique tel de l'époxy, et une préforme fibreuse, éventuellement avec des fibres de verre ou de carbone, préférentiellement la préforme comprend un empilement de feuilles avec des fibres tissées.

Suivant un mode avantageux de l'invention, la paroi comprend une rangée annulaire d'aubes statoriques avec des plateformes fixées à la paroi en formant une rangée annulaire, le ruban étant délimité axialement à un de ses bords amont ou aval par la rangée annulaire de plateformes d'aubes, préférentiellement la paroi comprend au moins deux rangées d'aubes avec des plateformes fixées à la paroi en rangées annulaires qui délimitent l'amont et l'aval du ruban.

Suivant un mode avantageux de l'invention, l'épaisseur des plateformes d'aubes statoriques est sensiblement égale à l'addition de l'épaisseur du ruban et de l'épaisseur de la couche d'abradable, préférentiellement les plateformes d'aubes comprennent des surfaces de butées qui coopèrent axialement avec le ruban.

Suivant un mode avantageux de l'invention, la zone lisse est centrée axialement sur la surface recouverte d'abradable et/ou sur le ruban.

Suivant un mode avantageux de l'invention, le matériau abradable comprend un matériau organique, et/ou un matériau élastomère, et/ou un matériau silicone.

Suivant un mode avantageux de l'invention, la zone lisse est unie, et/ou homogène.

Suivant un mode avantageux de l'invention, le ruban et/ou la couche d'abradable sont chacun venu de matière et/ou présentent chacun une continuité de matière.

Suivant un mode avantageux de l'invention, la bande présente des bords circulaires généralement parallèles.

Suivant un mode avantageux de l'invention, le profil de révolution du ruban est incliné par rapport à l'axe de rotation de turbomachine d'un angle supérieur à 2°, préférentiellement supérieur à 5°, plus préférentiellement supérieur à 10°.

Suivant un mode avantageux de l'invention, la paroi et le ruban sont réalisées en des matériaux différents, préférentiellement la densité de la paroi est inférieure à la densité du ruban.

Suivant un mode avantageux de l'invention, le ruban s'étend axialement sur entre 2% et 50% de la longueur axiale de la paroi, préférentiellement entre 4% et 30%, plus préférentiellement entre 6% et 15%.

Suivant un mode avantageux de l'invention, la paroi présente une épaisseur généralement constante.

Suivant un mode avantageux de l'invention, un des épaulements est formé dans l'épaisseur de la paroi.

Suivant un mode avantageux de l'invention, les aubes sont uniquement fixées à la paroi.

Suivant un mode avantageux de l'invention, la rangée annulaire de plateforme forme l'épaulement annulaire de la paroi qui délimite axialement la couche d'abradable et/ou le ruban.

Suivant un mode avantageux de l'invention, la paroi comprend au moins un, préférentiellement au moins deux épaulements annulaires délimitant axialement le ruban et éventuellement la couche d'abradable.

L'invention a également trait à une turbomachine comprenant un dispositif d'étanchéité, remarquable en ce que le dispositif d'étanchéité est conforme à l'invention, et en ce qu'elle comprend une rangée annulaire d'aubes rotoriques qui coopèrent par abrasion avec la couche d'abradable, éventuellement les aubes rotoriques présentant une extrémité externe majoritairement disposée dans la zone lisse.

Suivant un mode avantageux de l'invention, chaque aube rotorique comprend un bord d'attaque et un bord de fuite, la zone lisse étant majoritairement disposée axialement entre les bords d'attaque et les bords de fuite des aubes, au moins une zone perforée étant disposée au niveau des bords d'attaque et/ou des bords de fuite des aubes ; éventuellement les aubes sont des aubes de soufflante, les perforations du ruban traversent la couche d'abradable et communiquent avec un dispositif de réduction de bruit de la turbomachine.

Suivant un mode avantageux de l'invention, la turbomachine comprend en outre un bec de séparation majoritairement, supporté par la paroi annulaire, et/ou uniquement fixé en aval à la paroi.

### Avantages apportés

L'invention permet d'améliorer la cohésion de la couche d'abradable sur le ruban, entre autre s'il est formé d'un feuillard métallique. En cas de contact avec les extrémités d'aubes, l'abradable est moins fragilisé au niveau de la zone lisse, et ne se dégrade pas de manière prématurée. De même, dans le cas d'une application à un carter de soufflante, la couche d'abradable résiste mieux à l'abrasion, et permet de conserver la qualité de réduction du bruit du carter de soufflante. L'invention réduit le nombre de perforations nécessaires pour la fixation du ruban circulaire, ce qui en réduit le coût de fabrication. Le dispositif d'étanchéité permet de limiter les fuites entre les extrémités d'aubes et la paroi annulaire. En effet, le dispositif autorise de réduire le jeu aux extrémités des aubes rotoriques grâce au matériau abradable, quitte à ce qu'il y ait occasionnellement contact lorsque la turbomachine fonctionne.

### Brève description des dessins

La figure 1 représente une turbomachine axiale selon l'invention.
La figure 2 est un schéma d'un compresseur de turbomachine selon l'invention.
La figure 3 illustre un dispositif d'étanchéité de turbomachine selon l'invention.
La figure 4 esquisse un ruban de turbomachine selon l'invention.

### Description des modes de réalisation

Dans la description qui va suivre, les termes intérieur ou interne et extérieur ou externe renvoient à un positionnement par rapport à l'axe de rotation d'une turbomachine axiale. La direction axiale est selon l'axe de rotation de la turbomachine.

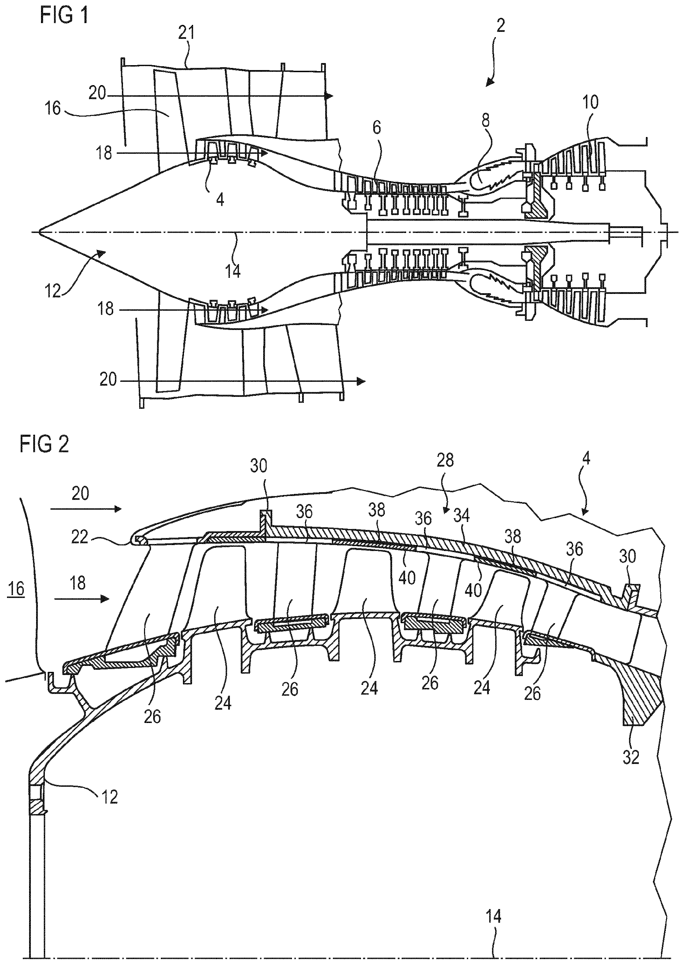

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12. Il comprend une ou plusieurs rangées annulaires d'aubes de soufflante, et génère un flux d'air qui se divise en plusieurs flux. Il peut se diviser en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine.

En particulier, la turbomachine 2 peut comprendre un dispositif d'étanchéité avec ruban de soufflante 21 présentant une forme généralement circulaire et peut être en métal, ou en polymère. Le ruban de soufflante 21 est disposé axialement au droit des aubes de soufflante. Le dispositif d'étanchéité peut comprendre une paroi de soufflante, généralement tubulaire, éventuellement en un matériau composite, avec une surface interne sur laquelle est disposée le ruban de soufflante 21. La turbomachine peut également comprendre un dispositif de réduction de bruit de la soufflante disposé autour de la paroi de soufflante.

La figure 2 est une vue en coupe d'un compresseur d'une turbomachine axiale 2 telle que celle de la figure 1. Le compresseur peut être un compresseur basse-pression 4, il pourrait également s'agir d'un compresseur haute pression. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Pour augmenter son rendement, la turbomachine comprend au moins un dispositif d'étanchéité, éventuellement plusieurs dispositifs d'étanchéité qui sont associés à des rangées d'aubes rotoriques 24, par exemple au niveau du compresseur 4. Au moins un dispositif d'étanchéité peut comprendre un carter externe 28 avec une paroi annulaire 34. La paroi peut comprendre au moins un, préférentiellement deux brides annulaires 30 disposée en amont et en aval de la paroi 34, par exemple pour la fixation du bec de séparation 22 et/ou pour fixer le carter externe 28 à un carter intermédiaire 32 de la turbomachine. Le carter 28 peut être formé de deux demi-coquilles séparées par un plan s'étendant axialement. Le compresseur 4 peut être délimité par le carter externe 28. Le dispositif d'étanchéité peut comprendre au moins une, préférentiellement plusieurs rangée d'aubes statoriques 26.

Le compresseur basse pression 4 forme plusieurs redresseurs, en l'occurrence quatre, chacun formé d'une rangée d'aubes statoriques 26. Les redresseurs sont associés à la soufflante 16, ou à une rangée d'aubes rotoriques pour redresser le flux d'air, de sorte à convertir la vitesse du flux en pression.

La paroi annulaire 34 peut présenter un profil de révolution par rapport à l'axe 14, elle présente une forme d'ogive, avec une variation de son rayon le long de l'axe 14. Cette évolution du rayon peut s'inverser. La paroi annulaire 34 présente une surface intérieure avec une double courbure, l'une des courbures étant selon un plan axial, l'autre courbure selon un plan radial. Il est entendu que le plan radial est perpendiculaire à l'axe 14, le plan axial s'étend axialement et radialement.

Les aubes statoriques 26 peuvent chacune comprendre une pale s'étendant dans le flux primaire 18, une plateforme 36, éventuellement avec un axe de fixation (non représentés) s'étendant radialement dans un sens opposé à celui de la pale. Les plateformes 36 peuvent être plaquées contre la surface interne de la paroi annulaire 34.

La surface extérieure de la paroi annulaire 34 peut délimiter un espace annulaire libre, qui est préférentiellement vide, qui peut s'étendre sur la majorité de sa longueur. La paroi annulaire 34 peut présenter des séries d'orifices de fixation (non représentés) pour la fixation des aubes statoriques 26, éventuellement avec des inserts (non représentés).

Au moins un ou chaque dispositif d'étanchéité peut comprendre au moins un ruban circulaire 38 avec une face interne et une face externe. Le ruban circulaire 38 peut être disposé sur la surface interne de la paroi annulaire 34. Le ruban 38 peut comprendre un matériau métallique, et peut former une bande tel un feuillard. Il peut être réalisé en un matériau différent de la paroi annulaire 34. Il peut présenter un bord amont et un bord aval circulaires, qui sont généralement parallèles. Il présente une épaisseur constante. Son épaisseur peut être comprise entre 0,05 mm et 3,00 mm, préférentiellement comprise entre 0,20 mm et 0,30 mm, valeurs incluses. Le dispositif d'étanchéité peut comprendre plusieurs rubans annulaires sur la paroi annulaire 34, éventuellement espacées et/ou réparties axialement le long de la paroi annulaire 34.

Le, préférentiellement chaque ruban 38 peut comprendre une couche annulaire de matériau abradable 40, et une surface recouverte par ladite couche de matériau abradable 40. La surface recouverte peut être une surface interne. Chaque couche d'abradable 40 peut être disposée au droit axialement de chaque rangée annulaire d'aubes rotoriques 24. Les rubans 38 permettent d'améliorer la cohésion des couches d'abradable 40 sur la paroi annulaire 34, éventuellement en formant un intercalaire dont le coefficient de dilation représente entre 10% et 500%, préférentiellement entre 50% et 200% du coefficient de dilatation de l'abradable. Chaque couche d'abradable 40 peut être associée à un ruban 38. Chaque ruban 38 peut s'étendre axialement sur la majorité, préférentiellement sur toute la longueur axiale de la couche d'abradable 40 associée. Chaque couche d'abradable 40 peut s'étendre axialement sur la majorité, préférentiellement sur toute la longueur axiale du ruban 38 associée. La couche abradable 40 peut être déposée par projection plasma sur un ruban. La paroi annulaire peut présenter des épaulements annulaires qui délimitent axialement les rubans 38, et éventuellement les couches d'abradable 40.

La paroi annulaire 34 peut être réalisée en un matériau composite, et peut être fabriquée par injection selon un procédé du type RTM (acronyme anglais pour Resin Transfer Molding). Un matériau composite peut comprendre une matrice et un renfort fibreux. La matrice peut comprende un matériau organique, tel un matériau thermoplastique, de l'époxy, du polyétherimide (PEI), du polyétheréthercétone (PEEK). Les fibres peuvent être des fibres dissociées, de longueur inférieure à 3,00 mm, préférentiellement inférieure à 0,50 mm. Les fibres peuvent être sous forme d'une préforme fibreuse. Une préforme peut comprendre un matelas de fibres tissées tridimensionnelement, et/ou un empilement de plis fibreux ou feuilles de fibres comprenant des fibres agencées en faisceaux de fibres tissés selon au moins deux directions. Les fibres peuvent être des fibres de carbone et/ou des fibres de verres.

Un matériau métallique peut comprendre de l'aluminium, de l'acier inoxydable, du titane, du fer, du nickel, de l'invar®. Il peut également comprendre un alliage des matériaux précités.

Selon la portée de l'invention, la paroi annulaire est un aspect optionnel. Le ruban peut former intégralement la paroi annulaire 34. Il peut former un élément structurel auquel tous les éléments en contact sont fixés, éventuellement certains éléments sont exclusivement fixés à la paroi.

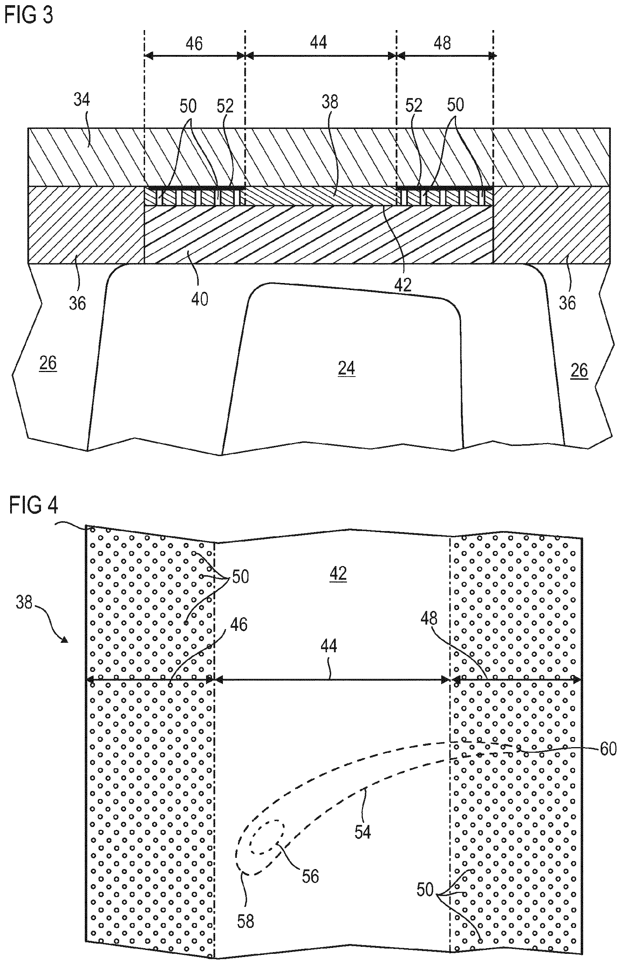

La figure 3 représente une portion de paroi de la turbomachine. Un ruban 38 est disposée sur une paroi annulaire 34. Une aube rotorique 24 et des aubes statoriques 26 avec leurs plateformes 36 sont visibles.

La surface recouverte 42 d'abradable du ruban 38 présente plusieurs zones circulaires, par exemple avec des rugosités différentes. La surface recouverte 42 peut comprendre une zone circulaire lisse 44 où la surface est lisse, et au moins une zone circulaire perforée (46 ; 48) avec une série des perforations 50 réparties sur ladite zone. La zone perforée peut délimiter axialement la zone lisse. La zone lisse est unie, et/ou homogène, en tout point. Elle peut être généralement libre de perforations. La zone lisse 44 peut présenter une rugosité inférieure à la rugosité de la zone perforée. La zone lisse 44 peut présenter une rugosité comprise entre 50 µm et 0,10 µm, préférentiellement comprise entre 12 µm et 0,50 µm, éventuellement comprise 3,50 µm et 0,80 µm. Une augmentation sensible de la rugosité peut permettre d'améliorer la cohésion de l'abradable sur la zone lisse. Préférentiellement, la surface recouverte 42 présente au moins deux zones circulaires perforées (46 ; 48), à savoir une première zone perforée 46 amont et une deuxième zone perforée 48 aval, entre lesquelles la zone lisse 44 peut être disposée. Eventuellement, la surface recouverte présente une alternance axiale de zones lisses et de zones perforées.

Le ruban 38 peut être fixée à la paroi annulaire 34, éventuellement directement. Leurs surfaces peuvent s'épouser, et/ou être plaquées l'une contre l'autre. La fixation peut s'effectuer avec de la colle 52. De la colle 52 peut être mise en oeuvre au niveau des zones perforées, préférentiellement uniquement au niveau des zones perforées (46 ; 48). Les perforations 50 peuvent traverser le ruban 38, par exemple pour permettre un dégazage de colle. Elles peuvent être faites par laser, par poinçon, par usinage.

Le ruban 38 est en contact axialement d'au moins une plateforme 36 d'aube statoriques 26, préférentiellement de toute la rangée de plateformes d'aubes. Préférentiellement, le ruban 38 peut être en contact en aval et en amont de rangées de plateformes 36. Les plateformes peuvent former des butées axiales pour le ruban.

Les surfaces internes de la couche d'abradable 40 et des plateformes 36 délimitent le flux primaire, elles sont dans le prolongement les unes des autres en formant une surface continue. L'épaisseur des plateformes 36 d'aubes 26 peut être sensiblement égale à l'addition de l'épaisseur du ruban 38 et de l'épaisseur de la couche d'abradable 40. Les plateformes 36 d'aubes 26 peuvent comprendre des surfaces de butées qui coopèrent axialement avec le ruban 38, et qui délimitent la couche d'abradable.

La figure 4 esquisse une vue en plan d'une portion de la surface recouverte d'abradable 42 du ruban 38 avec la position d'une extrémité d'aube rotorique, par exemple une aube de compresseur ou une aube de soufflante.

La zone lisse 44 peut s'étendre sur au moins 10% de la surface recouverte 42, préférentiellement sur la majorité, éventuellement sur plus de 80%. Elle peut être disposée axialement au milieu de la surface recouverte. Eventuellement, les zones (44, 46, 48) forment des bandes annulaires, par exemple avec des bords parallèles et/ou de largueur constante.

Les perforations 50 peuvent être régulièrement espacées les unes des autres axialement et/ou angulairement. Les perforations 50 d'au moins une, préférentiellement de chaque zone perforée (46 ; 48) peuvent être espacées selon un maillage régulier, par exemple en formant des sommets de triangles, ou des coins de carrés. La longueur axiale de la zone lisse 44 est supérieure à au moins 3 fois, préférentiellement au moins 20 fois, plus préférentiellement au moins 100 fois, éventuellement au moins 1000 fois l'écartement moyen entre les perforations.

Au moins une ou chaque zone perforée (46 ; 48) peut comprendre au moins 1 perforation 50 par cm2, préférentiellement au moins 20 perforations par cm2, plus préférentiellement au moins 150 perforations par cm2. Au moins une ou chaque zone perforée (46 ; 48) peut comprendre des perforations 50 ayant un diamètre inférieur ou égal à 3,00 mm, préférentiellement inférieur ou égal à 0,60 mm, plus préférentiellement inférieur ou égal à 0,05 mm.

Le ruban 38 peut s'étendre axialement tout le long des aubes rotoriques. L'extrémité radialement externe 54 de l'aube rotorique, ou chaque extrémité 54 d'aube, peut être centrée sur la couche d'abradable. Préférentiellement, l'extrémité 54 de l'aube, ou chaque extrémité 54 d'aube, est majoritairement, éventuellement totalement disposée axialement dans la zone lisse 44. Les extrémités des aubes peuvent présenter un sommet 56. Chaque sommet 56 représente moins de 80% de la longueur de l'extrémité 54, préférentiellement moins de 20%. Chaque sommet 56 peut être disposé axialement dans la zone lisse 44.

L'aube comprend un bord d'attaque 58 et un bord de fuite 60. La zone lisse 44 peut être disposée entre le bord d'attaque 58 et le bord de fuite 60 de l'aube rotorique. Au moins une zone perforée (46 ; 48) peut être disposée au niveau du bord d'attaque et/ou du bord de fuite de l'aube.

L'enseignement de l'invention peut également être appliqué au dispositif d'étanchéité au ruban de soufflante de la turbomachine. Il peut comprendre une couche annulaire de matériau d'abradable et une surface recouverte par l'abradable. Cette dernière comprend une zone circulaire lisse et une zone circulaire perforée avec des perforations traversant à la fois le ruban et la couche d'abradable. Eventuellement, les perforations réparties sur la zone perforée et peuvent permettre une communication avec le dispositif de réduction de bruit de la soufflante. Le présent enseignement peut également être appliqué à un support de joint, tel un joint labyrinthe. Il peut également être appliqué à un dispositif d'étanchéité de turbine, haute ou basse pression.

## Revendications

1. Dispositif d'étanchéité de turbomachine (2) axiale comprenant :
- un ruban circulaire (21 ; 38) avec une surface extérieure et une surface intérieure ;
- une couche annulaire de matériau abradable (40) sur une des surfaces extérieure et intérieure du ruban, destinée à assurer une étanchéité avec un élément tournant de la turbomachine (2) par rapport au ruban (21 ; 38), telle une rangée annulaire d'aubes (24), la surface du ruban recouverte (42) par la couche d'abradable (40) comporte au moins une zone circulaire perforée (46 ; 48) avec une série de perforations (50) réparties sur ladite zone (46 ; 48), et comprend, en outre, une zone circulaire lisse (44), **caractérisé en ce que** la longueur axiale de la zone lisse (44) est supérieure à au moins trois fois l'écartement moyen entre les perforations (50).

2. Dispositif d'étanchéité selon la revendication 1, **caractérisé en ce que** le ruban circulaire (21 ; 38) est une bande métallique tel un feuillard métallique, préférentiellement la surface recouverte (42) d'abradable est une surface interne du ruban (21 ; 38), éventuellement la couche d'abradable (40) bouche les perforations (50) de la zone perforée (46 ; 48).

3. Dispositif d'étanchéité selon l'une des revendications 1 à 2, **caractérisé en ce que** la zone lisse (44) est délimitée axialement par la zone perforée (46 ; 48), la zone lisse (44) s'étend sur au moins 20%, préférentiellement sur la majorité, plus préférentiellement sur au moins 80% de la surface du ruban recouverte (42) d'abradable.

4. Dispositif d'étanchéité selon l'une des revendications 1 à 3, **caractérisé en ce que** les perforations (50) de la zone perforée (46 ; 48) sont espacées selon un maillage régulier, la longueur axiale de la zone lisse (44) est supérieure à 5 fois, préférentiellement supérieure à 20 fois l'écartement moyen entre les perforations (50).

5. Dispositif d'étanchéité selon l'une des revendications 1 à 4, **caractérisé en ce que** le ruban circulaire (21 ; 38) présente une épaisseur constante comprise entre 0,05 mm et 2,00 mm ; préférentiellement comprise entre 0,10 mm et 0,60 mm; plus préférentiellement comprise entre 0,15 mm et 0,20 mm, éventuellement les zones forment des bandes annulaires.

6. Dispositif d'étanchéité selon l'une des revendications 1 à 5, **caractérisé en ce que** la zone perforée (46 ; 48) comprend au moins 5 perforations (50) par cm2 ayant un diamètre inférieur ou égal à 2,00 mm, préférentiellement au moins 30 perforations (50) par cm2 ayant un diamètre inférieur ou égal à 0,15 mm, plus préférentiellement au moins 100 perforations (50) par cm2 ayant un diamètre inférieur ou égal à 0,09 mm.

7. Dispositif d'étanchéité selon l'une des revendications 1 à 6, **caractérisé en ce que** la zone perforée et la série de perforations (50) sont respectivement une première zone circulaire perforée (46) et une première série de perforations (50), la surface recouverte (42) comprenant en outre une deuxième zone circulaire perforée (48) avec une deuxième série de perforations (50) réparties sur la deuxième zone (48), la zone lisse (44) étant disposée axialement entre la première zone (46) et la deuxième zone (48), préférentiellement le ruban comprend une alternance axiale de zones lisses et de zones perforées.

8. Dispositif d'étanchéité selon l'une des revendications 1 à 7, **caractérisé en ce que** la couche d'abradable (40) s'étend axialement sur toute la longueur axiale du ruban (38) et/ou le ruban (21 ; 38) s'étend axialement sur toute la longueur axiale de la couche d'abradable (40).

9. Dispositif d'étanchéité selon l'une des revendications 1 à 8, **caractérisé en ce qu'**il comprend une paroi annulaire (34) qui comprend une surface interne sur laquelle est disposée le ruban (21 ; 38), éventuellement la paroi annulaire (34) comprend plusieurs couches annulaires de matériau abradable (40) et plusieurs rubans (21 ; 38) qui sont intercalés entre la paroi et chaque couche d'abradable.

10. Dispositif d'étanchéité selon la revendication 9, **caractérisé en ce que** le ruban (21 ; 38) est fixé à la paroi annulaire (34) à l'aide de colle (52) mise en oeuvre au niveau d'au moins une zone perforée (50), préférentiellement la colle (52) est uniquement appliquée axialement sur chaque zone perforée (46 ; 48), éventuellement la paroi annulaire comprend au moins une bride annulaire de fixation (30) qui s'étend radialement et qui comprend des moyens de fixation tels des orifices de fixation.

11. Dispositif d'étanchéité selon l'une des revendications 9 à 10, **caractérisé en ce que** la paroi annulaire (34) comprend une résine organique tel de l'époxy, et une préforme fibreuse, éventuellement avec des fibres de verre ou de carbone, préférentiellement la préforme comprend un empilement de feuilles avec des fibres tissées.

12. Dispositif d'étanchéité selon l'une des revendications 9 à 11, **caractérisé en ce que** la paroi (34) comprend une rangée annulaire d'aubes statoriques (26) avec des plateformes (36) fixées à la paroi en formant une rangée annulaire, le ruban (21 ; 38) étant délimité axialement à un de ses bords amont ou aval par la rangée annulaire de plateformes d'aubes, préférentiellement la paroi (34) comprend au moins deux rangées d'aubes (26) avec des plateformes (36) fixées à la paroi en rangées annulaires qui délimitent l'amont et l'aval du ruban (38).

13. Dispositif d'étanchéité selon la revendication 12, **caractérisé en ce que** l'épaisseur des plateformes (36) d'aubes statoriques (26) est sensiblement égale à l'addition de l'épaisseur du ruban (21 ; 38) et de l'épaisseur de la couche d'abradable (40), préférentiellement les plateformes d'aubes comprennent des surfaces de butées qui coopèrent axialement avec le ruban.

14. Turbomachine (2) comprenant un dispositif d'étanchéité, **caractérisée en ce que** le dispositif d'étanchéité est conforme à l'une des revendications 1 à 13, et **en ce qu'**elle comprend une rangée annulaire d'aubes rotoriques (24) qui coopèrent par abrasion avec la couche d'abradable, éventuellement les aubes rotoriques (24) présentant une extrémité externe (54) majoritairement disposée dans la zone lisse (44).

15. Turbomachine (2) selon la revendication 14, **caractérisée en ce que** chaque aube rotorique (24) comprend un bord d'attaque (58) et un bord de fuite (60), la zone lisse (44) étant majoritairement disposée axialement entre les bords d'attaque (58) et les bords de fuite (60) des aubes, au moins une zone perforée (46 ; 48) étant disposée au niveau des bords d'attaque (58) et/ou des bords de fuite (60) des aubes ; éventuellement les aubes sont des aubes de soufflante (16), les perforations (50) du ruban (21) traversent la couche d'abradable (40) et communiquent avec un dispositif de réduction de bruit de la turbomachine (2).

## Patentansprüche

1. Dichtungsvorrichtung einer axialen Turbomaschine (2), mit:
- einem kreisförmigen Band (21; 38) mit einer Außenseite und einer Innenseite;
- einer ringförmigen Schicht eines Abriebmaterials (40) auf einer der Außenseiten und Innenseiten des Bandes, um eine Dichtigkeit mit einem rotierenden Element der Turbomaschine (2) im Verhältnis zu dem Band (21; 38) sicherzustellen, wie z.B. einer ringförmigen Reihe von Laufradschaufeln (24), wobei die Oberfläche des Bandes (42), die mit der Abriebschicht (40) bedeckt ist, mindestens eine perforierte kreisförmige Zone (46; 48) mit einer Serie von Perforationen (50) beinhaltet, die auf der genannten Zone (46; 48) verteilt sind, und außerdem eine glatte kreisförmige Zone (44) beinhaltet,
**dadurch gekennzeichnet, dass** die axiale Länge der glatten Zone (44) mindestens dem Dreifachen des mittleren Abstands zwischen den Perforationen (50) entspricht.

2. Dichtungsvorrichtung nach Anspruch 1, **dadurch gekennzeichnet, dass** das kreisförmige Band (21; 38) ein Metallstreifen ist, wie z.B. ein Metallband und die mit dem Abriebmaterial bedeckte Oberfläche (42) vorzugsweise eine Innenseite des Bandes (21; 38) ist und die Abriebschicht (40) die Perforationen (50) der perforierten Zone (46; 48) verschließt.

3. Dichtungsvorrichtung nach einem der Ansprüche 1 bis 2, **dadurch gekennzeichnet, dass** die glatte Zone (44) axial von der perforierten Zone (46; 48) begrenzt wird und sich die glatte Zone (44) über mindestens 20%, vorzugsweise den größeren Teil, noch bevorzugter über mindestens 80% der Oberfläche des mit Abriebmaterial bedeckten Bandes (42) erstreckt.

4. Dichtungsvorrichtung nach einem der Ansprüche 1 bis 3, **dadurch gekennzeichnet, dass** die Perforationen (50) der perforierten Zone (46; 48) in Form eines gleichmäßigen Netzwerks verteilt sind, wobei die axiale Länge der glatten Zone (44) 5 Mal höher, vorzugsweise 20 Mal höher ist, als der durchschnittliche Abstand zwischen den Perforationen (50).

5. Dichtungsvorrichtung nach einem der Ansprüche 1 bis 4, **dadurch gekennzeichnet, dass** das kreisförmige Band (21; 38) eine konstante Dicke aufweist, die zwischen 0,05 mm und 2,00 mm; vorzugsweise zwischen 0,10 mm und 0,60 mm; noch bevorzugter zwischen 0,15 mm und 0,20 mm beträgt, wobei die Zonen eventuell ringförmige Bänder bilden.

6. Dichtungsvorrichtung nach einem der Ansprüche 1 bis 5, **dadurch gekennzeichnet, dass** die perforierte Zone (46; 48) mindestens 5 Perforationen (50) pro cm2 mit einem Durchmesser von bis zu 2,00 mm, vorzugsweise mindestens 30 Perforationen (50) pro cm2 mit einem Durchmesser von bis zu 0,15 mm, noch bevorzugter mindestens 100 Perforationen (50) pro cm2 mit einem Durchmesser von bis zu 0,09 mm aufweist.

7. Dichtungsvorrichtung nach einem der Ansprüche 1 bis 6, **dadurch gekennzeichnet, dass** die perforierte Zone und die Serie von Perforationen (50) jeweils eine erste kreisförmige perforierte Zone (46) und eine erste Serie von Perforationen (50) sind und die bedeckte Oberfläche (42) außerdem eine zweite kreisförmige perforierte Zone (48) mit einer zweiten Serie von Perforationen (50) beinhaltet, die auf der zweiten Zone (48) verteilt sind, wobei die glatte Zone (44) axial zwischen der ersten Zone (46) und der zweiten Zone (48) angeordnet ist und das Band vorzugsweise einen axialen Wechsel von glatten Zonen und perforierten Zonen beinhaltet.

8. Dichtungsvorrichtung nach einem der Ansprüche 1 bis 7, **dadurch gekennzeichnet, dass** sich die Abriebschicht (40) axial über die gesamte axiale Länge des Bandes (38) und/oder sich das Band (21; 38) axial über die gesamte axiale Länge der Abriebschicht (40) erstreckt.

9. Dichtungsvorrichtung nach einem der Ansprüche 1 bis 8, **dadurch gekennzeichnet, dass** sie eine ringförmige Wandung (34) beinhaltet, die eine Innenfläche beinhaltet, auf der das Band (21; 38) angeordnet ist und die ringförmige Wandung (34) eventuell mehrere ringförmige Schichten Abriebmaterial (40) beinhaltet und mehrere Bänder (21; 38), die zwischen der Wandung und jeder Abriebschicht eingeschoben sind.

10. Dichtungsvorrichtung nach Anspruch 9, **dadurch gekennzeichnet, dass** das Band (21; 38) an der ringförmigen Wandung (34) mithilfe von Klebstoff (52) befestigt ist, der im Bereich von mindestens einer perforierten Zone (50) aufgetragen wird, wobei der Klebstoff (52) vorzugsweise nur axial auf jeder perforierten Zone (46; 48) aufgetragen wird und die ringförmige Wandung eventuell mindestens einen ringförmigen Befestigungsflansch (30) beinhaltet, der sich radial erstreckt und Befestigungsmittel, wie z.B. Befestigungsöffnungen beinhaltet.

11. Dichtungsvorrichtung nach einem der Ansprüche 9 bis 10, **dadurch gekennzeichnet, dass** die ringförmige Wandung (34) ein organisches Harz, wie z.B. Epoxy und eine fasrige Vorform beinhaltet, eventuell mit Glas- oder Kohlefasern, wobei die Vorform vorzugsweise eine Schichtung von Blättern mit gewebten Fasern beinhaltet.

12. Dichtungsvorrichtung nach einem der Ansprüche 9 bis 11, **dadurch gekennzeichnet, dass** die Wandung (34) eine ringförmige Reihe von Statorschaufeln (26) aufweist, mit Plattformen (36), die an der Wandung befestigt sind, indem sie eine ringförmige Reihe bilden, wobei das Band (21; 38) axial an einem ihrer oberen oder unteren Ränder von der ringförmigen Reihe von Leitschaufelplattformen begrenzt wird, wobei die Wandung (34) vorzugsweise mindestens zwei Reihen von Leitschaufeln (26) mit Plattformen (36) beinhaltet, die an der Wandung in ringförmigen Reihen befestigt sind, die die Vorder- und Hinterseite des Bandes (38) begrenzen.

13. Dichtungsvorrichtung nach Anspruch 12, **dadurch gekennzeichnet, dass** die Dicke der Plattformen (36) der Statorschaufeln (26) annähernd der Addition der Dicke des Bandes (21; 38) und der Dicke der Abriebschicht (40) entspricht und die Leitschaufelplattformen vorzugsweise Anschlagflächen beinhalten, die axial mit dem Band zusammenwirken.

14. Turbomaschine (2) mit einer Dichtungsvorrichtung, **dadurch gekennzeichnet, dass** die Dichtungsvorrichtung einem der Ansprüche 1 bis 13 entspricht und eine ringförmige Reihe von Rotorschaufeln (24) beinhaltet, die mittels Abrieb mit der Abriebschicht zusammenwirken, wobei die Rotorschaufeln (24) eventuell ein äußeres Ende (54) aufweisen, das überwiegend in der glatten Zone (44) angeordnet ist.

15. Turbomaschine (2) nach Anspruch 14, **dadurch gekennzeichnet, dass** jede Rotorschaufel (24) eine Vorderkante (58) und eine Hinterkante (60) aufweist, wobei die glatte Zone (44) überwiegend axial zwischen den Vorderkanten (58) und den Hinterkanten (60) der Leitschaufeln angeordnet ist und mindestens eine perforierte Zone (46; 48) im Bereich der Vorderkanten (58) und/oder Hinterkanten (60) der Leitschaufeln angeordnet ist; eventuell sind die Leitschaufeln Bläserschaufeln (16) und die Perforationen (50) des Bandes (21) durchqueren die Abriebschicht (40) und kommunizieren mit einer Lärmreduzierungsvorrichtung der Turbomaschine (2).

## Claims

1. Sealing device of an axial turbomachine (2), comprising:
- a circular strip (21; 38) with an outer surface and an inner surface;
- an annular layer of abradable material (40) on one of the outer and inner surfaces of the strip, designed to provide a sealing with a turning component of the turbomachine (2) relative to the strip (21; 38), such as an annular row of blades (24), the surface (42) of the strip covered by the abradable layer (40) comprises at least one circular perforated zone (46; 48) with a series of perforations (50) distributed over said zone (46; 48), and further comprises a smooth circular zone (44);
**characterized in that**
the axial length of the smooth zone (44) is greater than 3 times the average spacing between the perforations (50).

2. Sealing device according to claim 1, **characterized in that** the circular strip (21; 38) is a metal strip such as a metal foil, preferably the surface (42) of the strip covered by the abradable layer is an inner surface of the strip (21; 38), optionally the abradable layer (40) clogs the perforations (50) of the perforated zone (46; 48).

3. Sealing device according to one of claims 1 to 2, **characterized in that** the smooth zone (44) is axially delimited by the perforated zone (46; 48), the smooth zone (44) extends over at least 20%, preferably over the majority, more preferably over at least 80% of the surface (42) of the strip covered by the abradable layer.

4. Sealing device according to one of claims 1 to 3, **characterized in that** the perforations (50) of the perforated zone (46; 48) are spaced in a regular grid, the axial length of the smooth zone (44) is greater than 5 times, preferably greater than 20 times the average spacing between the perforations (50).

5. Sealing arrangement according to one of claims 1 to 4, **characterized in that** the circular strip (21; 38) has a constant thickness comprised between 0.05 mm and 2.00 mm; preferably between 0.10 mm and 0.60 mm; more preferably between 0.15 mm and 0.20 mm, the zones optionally forming annular bands.

6. Sealing device according to one of claims 1 to 5, **characterized in that** the perforated zone (46; 48) comprises at least 5 perforations (50) per cm² having a diameter less than or equal to 2.00 mm, preferably at least 30 perforations (50) per cm² having a diameter less than or equal to 0.15 mm, more preferably at least 100 perforations (50) per cm² having a diameter less than or equal to 0.09 mm.

7. Sealing device according to one of claims 1 to 6, **characterized in that** the perforated zone and the series of perforations (50) are respectively a first circular perforated zone (46) and a first series of perforations (50), the surface (42) of the strip covered by the abradable layer further comprising a second perforated circular zone (48) with a second series of perforations (50) distributed over the second zone (48), the smooth zone (44) being disposed axially between the first zone (46) and the second zone (48), the strip preferably includes an axial alternating of smooth zones and perforated zones.

8. Sealing device according to one of claims 1 to 7, **characterized in that** the abradable layer (40) extends axially over the entire axial length of the strip (38) and/or the strip (21; 38) extends axially over the entire axial length of the abradable layer (40).

9. Sealing device according to one of claims 1 to 8, **characterized in that** it comprises an annular wall (34) which comprises an inner surface on which the strip (21; 38) is disposed, optionally the annular wall (34) comprises a plurality of annular layers of abradable material (40) and several strips (21, 38) which are interposed between the wall and each abradable layer.

10. Sealing device according to claim 9, **characterized in that** the strip (21; 38) is attached to the annular wall (34) with glue or adhesive (52) applied on at least one perforated zone (50), preferably the glue or adhesive (52) is only applied on each perforated zone (46, 48), optionally the annular wall comprises at least one annular flange (30) which extends radially and which comprises fixing means such as fixing holes.

11. Sealing device according to one of claims 9 to 10, **characterized in that** the annular wall (34) comprises an organic resin such as epoxy, and a fiber preform, optionally with glass fibers or carbon, preferably the preform comprises a stack of sheets with woven fibers.

12. Sealing Device according to one of claims 9 to 11, **characterized in that** the wall (34) comprises an annular row of stator blades (26) with platforms (36) fixed to the wall forming an annular row, the strip (21; 38) being delimited axially on one of its upstream and downstream edges by the annular row of blade platforms, preferably the wall (34) comprises at least two rows of blades (26) with platform (36) fixed to the wall in annular rows which delimit the upstream and downstream sides of the strip (38).

13. Sealing device according to claim 12, **characterized in that** the thickness of the platform (36) of stator blades (26) is substantially equal to the sum of the thickness of the strip (21; 38) and the thickness of the abradable layer (40), preferably the blade platforms comprise stop surfaces which cooperate axially with the strip.

14. Turbomachine (2) comprising a sealing device, **characterized in that** the sealing device conforms to one of claims 1 to 13, and **in that** it comprises an annular row of rotor blades (24) cooperating by abrasion with the abradable layer, optionally the rotor blades (24) having an outer end (54) arranged mainly in the smooth zone (44).

15. Turbomachine (2) according to claim 14, **characterized in that** each rotor blade (24) comprises a leading edge (58) and a trailing edge (60), the smooth zone (44) being disposed axially predominantly between the leading edge (58) and trailing edge (60) of the blades, at least one perforated zone (46; 48) being disposed at the leading edges (58) and/or trailing edges (60) of the blades; optionally the blades are fan blades (16), the perforations (50) of the strip (21) extending through the abradable layer (40) and communicating with a noise reducing device of the turbomachine (2).
